# EUROPÄISCHE PATENTSCHRIFT

(11) **EP 0 620 519 B1**
(45) Veröffentlichungstag und Bekanntmachung des Hinweises auf die Patenterteilung: **02.11.2000**
(21) Anmeldenummer: 94105473.6
(22) Anmeldetag: 08.04.1994
(51) Int. Cl.: G06F 7/00

(54) **Vorrichtung zur Inferenzbildung und Defuzzifikation und ihre Verwendung in einem hochauflösenden Fuzzy-Logik-Coprozessor**
Device for generating inference and defuzzification and their application to a high-definition fuzzy logic coprocessor
Appareil à générer l'inférence et la défuzzification et leur application dans un coprocesseur à logique floue à haute définition

(30) Priorität: 14.04.1993 DE 4312120
(43) Veröffentlichungstag der Anmeldung: 19.10.1994
(73) Patentinhaber: SIEMENS AKTIENGESELLSCHAFT, 80333 München (DE)
(72) Erfinder: Eichfeld, Herbert, Dipl-Ing., D-80538 München (DE); Waidelich, Markus, Dipl-Ing., D-80639 München (DE)

(56) Entgegenhaltungen:
- EP-A- 0 424 890
- IEEE International Conference on Fuzzy Sytems, ICFS '93, seiten 968-973; Smith: 'Parallel dynamic switching of reasoning methods in a fuzzy system'
- 1993 IEEE Int. Solid-State Circuits Conference, 2/93, Digest of Tech. Papers, pp180-181, 286; Eichfeld et al: 'An 8b Fuzzy Coprocessor for Fuzzy Control'
- PATENT ABSTRACTS OF JAPAN vol. 4, no. 160 (P-035) 8. November 1980 & JP-A-55 108 050 (TOSHIBA)
- IBM TECHNICAL DISCLOSURE BULLETIN., Bd.13, Nr.2, Juli 1970, NEW YORK US Seiten 546 - 548 'High Speed Mulitplier'

## Beschreibung

Ein Fuzzy-Logic-Coprozessor mit einer Vorrichtung zur Inferenzbildung und einer Vorrichtung zur Defuzzifikation ist beispielsweise in der deutschen Patentanmeldung mit dem amtlichen Kennzeichen P 42 25 758.1 beschrieben. Dabei handelt es sich um einen Fuzzy-Logic-Controller, der in einer Inferenzeinheit aus Gewichtungsfaktoren und Werten der Zugehörigkeitsfunktionen der linguistischen Werte der Ausgangsvariablen eine unscharfe Vereinigungsmenge bildet und der in einer nachgeschalteten Defuzzifikationseinheit aus der unscharfen Vereinigungsmenge ein scharfes Ausgangssignal bildet.

Aus der Veröffentlichung zur Second IEEE International Conference on Fuzzy Systems, Vol. II, Seiten 968 bis 973, ist eine Vorrichtung zur Inferenzbildung und zur Defuzzifikation bekannt, bei der aus Gewichtungsfaktoren und den Zugehörigkeitsfunktionswerten der linguistischen Werte der Ausgangsvariablen scharfe Ausgangssignale gebildet werden.

Aus der europäischen Patentanmeldung EP 0 424 890 A2 ist eine Beschreibung von Zugehörigkeitsfunktionen durch drei Punkte anstelle von Wertetabellen bekannt, um Speicherplatz zu sparen. Hierbei wird zum Beispiel die Fläche und eine Schwerpunktskoordinate eines durch die drei Punkte gegebenen Dreiecks berechnet.

Die der Erfindung zugrundeliegende Aufgabe liegt nun darin, eine Vorrichtung zur Inferenzbildung und Defuzzifikation anzugeben, die bei vergleichbarer Chipfläche für die Vorrichtung zur Inferenzbildung und Defuzzifikation, insbesondere bei Fuzzy-Logic-Coprozessoren mit einer Auflösung größer gleich 8 Bit, eine höhere Verarbeitungsgeschwindigkeit und einen kleineren Wissensbasisspeicher ermöglicht, ohne dabei nennenswerte Nachteile in den Regelungseigenschaften des Fuzzy-Logic-Coprozessors in Kauf nehmen zu müssen.

Diese Aufgabe wird erfindungsgemäß durch die im Patentanspruch 1 oder 2 angegebenen Merkmale gelöst.

Die Ansprüche 3 und 4 sind auf bevorzugte Ausbildungen der erfindungsgemäßen Vorrichtung und der Anspruch 5 auf eine vorteilhafte Verwendung der erfindungsgemäßen Vorrichtung gerichtet.

Die Erfindung wird nachfolgend anhand der Zeichnungen näher erläutert. Dabei zeigt
- Figur 1: ein Blockschaltbild eines Fuzzy-Logic-Controllers mit erfindungsgemäßer Vorrichtung zur Inferenzbildung und Defuzzifikation,
- Figur 2: eine Detailschaltung eines in der erfindungsmäßen Vorrichtung enthaltenen Rechenwerks und
- Figur 3: eine Detailschaltung einer in der erfindungsgemäßen Vorrichtung enthaltenen Speicher/Register-Einheit.

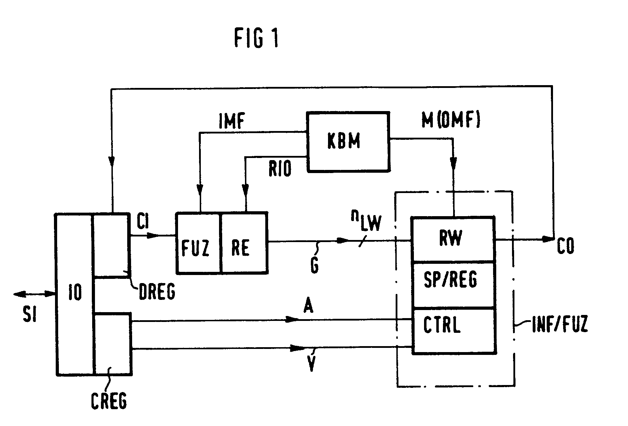

Der in Figur 1 in einem Blockschaltbild dargestellte Fuzzy-Logic-Controller weist eine Eingangs/Ausgangs-Einheit IO mit beispielsweise einem Datenregister DREG und beispielsweise einem Steuerregister CREG, eine Fuzzifikationseinheit FUZ, eine Regelauswerteeinheit RE, einen Wissensbasisspeicher KBM und eine erfindungsgemäße Vorrichtung INF/DFUZ zur Inferenzbildung und Defuzzifikation auf.

Die erfindungsgemäße Vorrichtung besteht dabei aus einem Rechenwerk RW, einer Speicher/Register-Einheit SP/REG und einem Steuerwerk CTRL. Über eine Schnittstelle SI ist das Datenregister DREG und das Steuerregister CREG der Eingangs/Ausgangs-Einheit IO lesbar bzw. beschreibbar. Aus dem Datenregister DREG stammende scharfe Eingangswerte CI sind in der Fuzzifikationseinheit zusammen mit Werten der Zugehörigkeitsfunktion IMF der linguistischen Werte der Eingangsvariablen und in der nachgeschalteten Regelauswerteeinheit RE mit Werten RIO zur Regelbildung zu sogenannten aggegrierten Gewichten G verarbeitbar, wobei die Werte der Zugehörigkeitsfunktion IMF und die Werte RIO aus dem Wissensbasisspeicher KBM stammen. Bei den sogenannten aggregierten Gewichten handelt es sich um jeweils einen Gewichtungsfaktor pro linguistischen Wert der Ausgangsvariablen, also um n_{LW} Gewichtungsfaktoren, wobei n_{LW} die Anzahl der linguistischen Werte der Ausgangsvariablen bedeutet.

In der erfindungsgemäßen Vorrichtung INF/DFUZ werden nun nicht mehr wie bei bekannten Fuzzy-Logic-Controllern Werte der Zugehörigkeitsfunktion OMF der lingustischen Werte der Ausgangsvariablen gemeinsam mit den Gewichtungsfaktoren G zu scharfen Ausgangswerten CO verarbeitet, unter Verzicht der vollständigen Forminformation und Überlappung der Zugehörigkeitsfunktionen sind in der erfindungsgemäßen Vorrichtung INF/DFUZ die scharfen Ausgangswerte CO aus den Gewichtungsfaktoren G und aus Maßzahlen M (OMF), die die Zugehörigkeitsfunktionen der linguistischen Werte der Ausgangsvariablen charaktierisieren, bildbar und beispielsweise dem Datenregister DREG zuführbar.

Es erfolgt die Inferenzbildung, also die Gewichtung der Zugehörigkeitsfunktionen der lingustischen Werte der Ausgangsvariablen durch die Gewichtungsfaktoren G, nicht durch Minimum-Bildung, also durch Abschneiden der Zugehörigkeitsfunktionen auf dem Gewichtungsniveau, sondern durch Produktbildung, wodurch eine Reihe von Berechnungsschritten unabhängig von den Gewichtungsfaktoren G sind und somit vorab berechnet und im Wissensbasisspeicher KBM als Maßzahlen M(OMF) abgespeichert werden können. Erfolgt eine Defuzzifikation nach der Schwerpunktsmethode COG (center of gravitiy), so reicht es beispielsweise, daß pro linguistischem Wert der Ausgangsvariablen eine Schwerpunktskoordinate der jeweiligen Zugehörigkeitsfunktion als erste Maßzahl S und die Fläche der jeweiligen Zugehörigkeitsfunktion als zweite Maßzahl F dem Wissensbasisspeicher KBM gespeichert werden.

Bei einer Defuzzifikation nach dem sogenannten MOM-Verfahren (mean of maximum) oder nach einem neuen sogenannten MMM-Verfahren (middle member of maximum) das noch näher erläutert wird, sind pro lingustischem Wert der Ausgangsvariablen lediglich eine dritte Maßzahl H, die den Maximalwert der Zugehörigkeitsfunktion des jeweiligen linguistischen Wertes der Ausgangsvariablen angibt, eine vierte Maßzahl B die die Anzahl der Elemente angibt, die einen maximalen Zugehörigkeitswert besitzen, und eine fünfte Maßzahl P, die einen Mittelwert aller Elemente darstellt, an denen die jeweilige Zugehörigkeitsfunktion ihren maximalen Zugehörigkeitswert erreicht, erforderlich. Durch die Verwendung dieser fünf Maßzahlen pro linguistischem Wert anstelle der Werte für die Zugehörigkeitsfunktion des jeweiligen linguistischen Wertes können viele Berechnungsschritte vorab durchgeführt werden und der Speicherplatz für die Zugehörigkeitsfunktionen der linguistischen Werte für die Ausgangsvariable kann drastisch reduziert werden. In der nachfolgenden Tabelle sind die Rechenzeit t_{R} und der für die Maßzahlen erforderliche Speicherplatz S in Abhängigkeit von der Auflösung aₓ des scharfen Ausgangswertes eines Fuzzy-Logic-Controllers in Prozent angegeben, wobei 100 Prozent jeweils dem Wert des bekannten eingangs genannten Fuzzy-Logic-Controllers entspricht.

**Tabelle**

| aₓ | 6 Bit | 8 Bit | 10 Bit | 12 Bit | 14 Bit | 16 Bit |
|---|---|---|---|---|---|---|
| t_{R} | 250 % | 74 % | 22 % | 6 % | 1,8 % | 0,5 % |
| S | 34 % | 8,3 % | 2 % | 0,51 % | 0,13 % | 0,03 % |

Aus obiger Tabelle wird deutlich, daß besonders für Fuzzy-Logic-Controller mit hoher Auflösung, beispielsweise 16 Bit, vorteilhafterweise mit einer erfindungsgemäßen Vorrichtung (INF/DFUZ) zu Inferenzbildung und Defuzzifikation auszustatten sind.

Das Steuerwerk CTRL ist vorteilhafterweise durch Verfahrensauswahlsignale V und Signale A zur Festlegung der Ausgangsauflösung ansteuerbar, wobei die Signale A und V aus dem Steuerregister CREG stammen. Bei einer konkreten Ausbildung der erfindungsgemäßen Vorrichtung wurde ein 5 Bit breites Verfahrensauswahlsignal V zur Auswahl von 9 Defuzzifikationsverfahren und ein 3 Bit breites Signal zur Festlegung der Auflösung A verwandt. Es wurde das oben erwähnte COG-Verfahren, das oben erwähnte MOM-Verfahren und das oben erwähnte MMM-Verfahren und ein sogenanntes First-Max- bzw. Last-Max-Verfahren, bei dem das Element, bei dem zum ersten bzw. zum letzten Mal der Maximalwert der unscharfen Vereinigungsmenge erreicht wird, als scharfer Ausgangswert herangezogen werden, vorgesehen. Ferner ist es von Vorteil, nicht nur Zugehörigkeitsfunktionen sondern auch für sogenannte Singletons vorzusehen, bei denen die Zugehörigkeitsfunktionen jeweils die Fläche Eins besitzt und jeweils auf ein Element der Definitionsbereiches konzentriert sind. Eine Defuzzifikation nach der MMM-Methode stellt bei Verwendung von Singletons gegenüber der MOM-Methode für Singletons kein weiteres Verfahren dar und wurde deshalb für Singletons nicht vorgesehen.

Eine weitere Verbesserung der Arbeitsgeschwindigkeit kann bei Betriebsfällen, bei denen nur eine geringere Auflösung als die maximal mögliche Auflösung des scharfen Ausgangssignals erforderlich ist, dadurch erreicht werden, daß mit Hilfe des Signals A dem Steuerwerk CTRL mitteilbar ist, wodurch dieses beispielsweise das Rechenwerk RW zur Ausführung einer verminderten Anzahl von Additions/Verschiebe-Schritten bzw. Subtraktions/Verschiebe-Schritten bei einer Multiplikation bzw. Division veranlaßt.

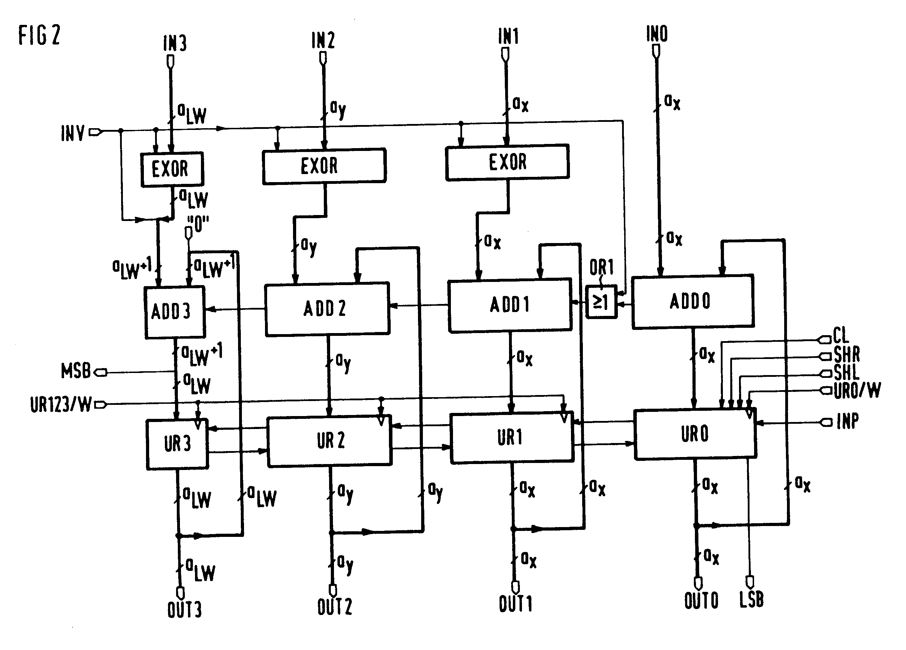

In Figur 2 ist ein mögliches Rechenwerk RW detailliert dargestellt und enthält als Hauptbestandteile Addierer ADDO ... ADD3 und ein Universalregister, das in Registerteile UR0 ... UR3 gruppiert ist. Das Universalregister besteht aus einem Links/Rechts-Schieberegister, das parallel ladbar und parallel auslesbar ist. Der Inhalt des Universalregisters UR0 ... UR3 kann durch ein Signal CL gelöscht, durch ein Signal SHR nach rechts verschoben und durch ein Signal SHL nach links verschoben werden. Der Registerteil UR0 besitzt einen seriellen Dateneingang INP, dessen Daten abhängig von einem Schreibsignal URO/W in dem Registerteil UR0 einschreibbar sind. Der Addierer ADD0 ist eingangsseitig mit einem Datenbus IN0 und ausgangsseitig mit dem Registerteil UR0 verbunden, dessen Ausgang OUT0 auf den zweiten Eingang des Addierers ADD0 rückgekoppelt ist. Die Wortbreite des Busses IN0, des Addierers ADD0 und des Registerteils UR0 beträgt aₓ Bit, wobei aₓ die Auflösung des scharfen Ausgangswertes CO darstellt. Der Addierer ADD1 ist eingangsseitig bitweise über EXOR-Gatter EXOR mit einem Datenbus IN1 und ausgangsseitig mit dem Registerteil UR1 verbunden, dessen Ausgang OUT1 auf den zweiten Eingang des Addierers ADD1 rückgekoppelt sind. Die Wortbreite des Busses IN1, des Addierers ADD1 und des Registerteils UR1 beträgt ebenfalls aₓ Bit. Der Addierer ADD2 ist eingangsseitig bitweise über EXOR-Gatter EXOR mit einem Datenbus IN2 und ausgangsseitig mit dem Registerteil UR2 verbunden, dessen Ausgang OUT2 auf den zweiten Eingang des Addierers ADD2 rückgekoppelt ist. Die Wortbreite des Busses IN2, des Addierers ADD2 und des Registerteils UR2 beträgt a_{y}, wobei a_{y} die Auflösung der Zugehörigkeitswerte in Bits bedeutet. Der Addierer ADD3 ist eingangsseitig bitweise über EXOR-Gatter EXOR mit einem Datenbus IN3 und ausgangsseitig mit dem Registerteil UR3 verbunden, dessen Ausgang OUT3 auf den zweiten Eingang des Addierers ADD3 rückgekoppelt ist. Die Wortbreite des Busses IN3 und des Registerteils UR3 beträgt a_{LW} Bit, wobei a_{LW} die Auflösung der Anzahl linguistischer Werte in Bit bedeutet. Die Wortbreite ADD3 beträgt a_{LW}+1 Bit beträgt und das höchstwertige Bit am ersten Eingang des Addierers ADD3 mit einem Invertierungssignal INV und das höchstwertige Bit des zweiten Eingangs des Addierers ADD3 mit einer logischen Null versorgt. Das höchstwertige Bit MSB des Addierers ADD3 liefert dem Steuerwerk das Vorzeichen des Additionsergebnisses und das niedrigstwertige Bit LSB des Registerteils UR0 wird vom Steuerwerk CRTL bei der Durchführung von Multiplikationen ausgewertet. Durch das Invertierungssignal INV können die Daten der Busse IN1 ... IN3 invertiert oder nicht invertiert zu den ersten Eingängen der Addierer ADD1 ... ADD3 gelangen. Es findet ein Übertrag des Addierers ADD1 zum Addierer ADD2 und ein Übertrag des Addierers ADD2 auf den Addierer ADD3 statt und ein Übertrag des Addierers ADD0 ist in einer ODER-Verknüpfung OR1 mit dem Invertierungssignal INV verknüpfbar und dem Addierer ADD1 zuführbar. Das Invertierungssignal bewirkt somit neben der Invertierung gleichzeitig ein Setzen des Übertragsbits des Addierers ADD0. Die Invertierung in Verbindung mit dem Übertragsbit dient der Subtraktion durch Bildung des Zweierkomplements der Busse IN1 ... IN3. Da Subtraktionen nur in den Registerteilen UR1 ... UR3 vornehmbar sind, besteht die Möglichkeit, die Additionsergebnisse getrennt in den Registerteil UR0 mit dem Signal UR0/W und in die Registerteile UR1 ... UR3 mit einem Signal UR123/W zu übernehmen.

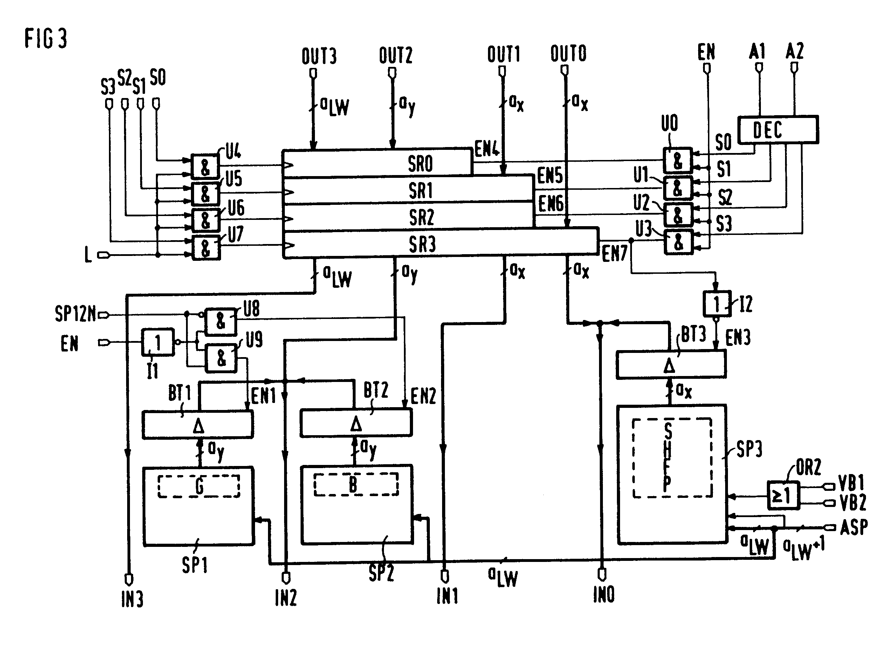

Eine mögliche Speicher/Register-Einheit SR/REG ist in Figur 3 detailliert dargestellt und weist im wesentlichen vier Zwischenregister SR0 ... SR3 (scratch register) und drei Speicher SP1 ... SP3 auf, wobei der Speicher SP1 für den Gewichtungsfaktor G, der Speicher SP2 für die Maßzahl B und der Speicher SP3 für die Maßzahlen S, H, F und P vorgesehen ist. Das Zwischenregister SR0 ist eingangsseitig mit den Anschlüssen OUT2 und OUT3 des Rechenwerks und ausgangsseitig mit den Bussen IN2 und IN3 verbunden. Die Zwischenregister SR1 und SR2 sind an ihren Dateneingängen mit den Anschlüssen OUT1 ... OUT3 des Rechenwerks und am Datenausgang mit den Bussen IN1 ... IN3 beschaltet. Das Zwischenregister SR3 ist eingangsseitig mit den Anschlüssen OUT0 ... OUT3 und ausgangsseitig mit den Bussen IN0 ... IN3 verbunden. Ein 1 aus 4-Decoder DEC erzeugt aus zwei Auswahlbits A1 und A2 die Bit signifikanten Selektorsignale S0 ... S3, die jeweils mit einem Aktivierungssignal EN (enable) mit Hilfe von vier UND-Gattern U0 ... U3 zu einem Aktivierungssignal EN4 für das Register SR0, einem Aktivierungssignal EN5 für das Register SR1, einem Aktivierungssignal EN5 für das Register SR2 und einem Aktivierungssignal EN7 für das Register SR3 verknüpfbar sind. Ferner sind die Selektorsignale S0 ... S3 über UND-Gatter U4 ... U7 jeweils mit einem Sperrsignal L (lock) zu einem Schreibsignal für das Register SR0, einem Schreibsignal für das Register SR1, einem Schreibsignal für das Register SR2 und einem Schreibsignal für das Register SR3 verknüpfbar. Der Speicher SP1 ist über einen Bustreiber BT1 und der Speicher SP2 ist über den Bustreiber BT2 auf den Bus IN2 schaltbar. Der Bustreiber BT1 wird durch ein Aktivierungssignal EN1 und der Bustreiber BT2 durch ein Aktivierungssignal EN2 aktiviert und legt die jeweiligen Speicherdaten auf den Bus EN2. Das durch einen Inverter I1 invertierte Aktivierungssignal TN ist in einer UND-Verknüpfung U9 mit einem Speicherauswahlsignal SP12N verknüpft und liefert das Aktivierungssignal EN1. Ferner ist das durch den Inverter I1 invertierte Aktivierungssignal mit dem invertierten Speicherauswahlsignal SP12N in einer UND-Verknüpfung U8 verknüpft und liefert das Aktivierungssignal EN2. Der Speicher SP3 ist über einen Bustreiber BT3 auf den Bus IN0 legbar, wobei der Bustreiber BT3 ein Aktivierungssignal EN3 dadurch erhält, daß ihm das Aktivierungssignal EN7 für das Register SR3 über einen Inverter I2 zugeführt wird. In Speichern SP1 und SP2 sind Speicheradressen ASP bis auf die niedrigstwertige Adresse A1 mit einer Wortbreite von a_{LW} Bit zuführbar, wodurch der Gewichtungsfaktor und die Maßzahl B für jeden linguistischen Wert adressierbar ist. Da der Speicher SP3 viermal so viele Daten wie zum Beispiel der Speicher SP1 oder der Speicher SP2 enthält, benötigt er zur Adressierung zwei zusätzliche Adreßleitungen. Dies ist einerseits das LSB der Speicheradresse ASP und ein Adreßsignal, das beispielsweise in einem ODER-Gatter OR2 aus zwei Bits VB1 und VB2 des Verfahrensauswahlsignals V bildbar ist.

Im Steuerwerk CTRL ist aus einem Taktsignal, dem Signal A zur Festlegung der Auflösung und dem Verfahrensauswahlsignal V die Auswahlbits A1 und A2, das Speicherauswahlsignal SP12N, das Verriegelungssignal L, das Aktivierungssignal EN, die Speicheradresse ASP für die Speicher SP1 ... SP3, das serielle Eingangssignal INP für das Universalregister UR0, das Schreibsignal URO/W und UR123/W, das Löschsignal CL und die Schiebesignale SHR und SHL für das Universalregister UR0 ... UR3 sowie das Invertierungssignal INV bildbar sind. Das Steuerwerk läßt sich beispielsweise aus diskreten Bauelementen wie Gatter, Flipflops und Zähler oder aber vorteilhafterweise rechnergestützt mit einer Hardware-Beschreibungssprache, zum Beispiel VHDL (VHDL = VHSIC Hardware Description Language), automatisch generieren. Die gewünschten Steuersignale und ihre Abfolge werden in einer abstrakten Form angegeben, woraus dann per Rechner ein Steuerwerk in Form einer sogenannten black-box, deren diskreter Aufbau nicht mehr interessiert, erzeugbar ist.

Wie bereits oben erwähnt, sind mit Hilfe der erfindungsgemäßen Vorrichtung INF/DFUZ mehrere Defuzzifikationsverfahren möglich, die exemplarisch anhand des Schwerpunktsverfahrens COG, des MOM-Verfahrens und des MMM-Verfahrens im folgenden näher erläutert sind, um eine Hardwarebeschreibung des Steuerwerks auf diesem Weg zu ermöglichen.

Bei einer Defuzzifikation nach dem Schwerpunktsverfahren (COG) wird für jeden linguistischen Wert der Ausgangsvariablen das Produkt aus der Maßzahl F für die jeweilige Fläche und den jeweiligen Gewichtungsfaktor G ein Produkt gebildet und zu einer Gesamtfläche aufsummiert und hierdurch eine Inferenzbildung bewirkt. Ferner wird für jeden linguistischen Wert der Ausgangsvariablen das Produkt aus der Maßzahl F für die jeweilige Fläche, aus der Maßzahl S für die jeweilige Schwerpunktskoordinate und aus dem jeweiligen Gewichtungsfaktor G gebildet und zu einem Gesamtmoment aufaddiert. Der scharfe Ausgangswert CO wird anschließend aus dem Quotient von Gesamtmoment durch Gesamtfläche berechnet.

Hierzu werden vom Speicher SP1 der jeweilige Gewichtungsfaktor und vom Speicher SP3 die jeweilige Fläche des linguistischen Wertes ausgelesen und die Universalregister UR0 ... UR3 gelöscht sowie anschließend der Inhalt des Speichers SP3 in das Universalregister UR0 übernommen. Daraufhin erfolgt eine Multiplikation des Inhaltes vom Universalregister UR0 mit den Daten auf dem Bus IN2, wobei das Ergebnis in den Universalregistern UR2 und UR1 steht. Hierzu wird aₓ mal eine Übernahme der Daten der Addiererausgänge in die Universalregister UR1 bis UR3 durchgeführt, wenn das Signal LSB gleich 1 ist, und anschließend das Universalregister UR0 ... UR3 ein Bit nach rechts verschoben. Daraufhin wird der Inhalt der Register UR1 ... UR3, also die gewichtete Fläche, in das Zwischenregister SR2 übernommen und die Adresse ASP um 1 erhöht. Daraufhin wird das Zwischenregister SR1, also die bisherige Gesamtfläche, ausgelesen und der Inhalt dieses Zwischenregisters in die Registerteile UR1 ... UR3 übernommen und die Summe aus gewichteter Fläche und bisheriger Gesamtfläche als neue Gesamtfläche in das Zwischenregister SR1 übernommen. Zur Momentbildung wird das Zwischenregister SR2 mit der gewichteten Fläche für den jeweiligen linguistischen Wert und Speicher SP3 für den Schwerpunkt des jeweiligen linguistischen Wertes gelesen und der Inhalt des Speicher SP3 also die Schwerpunktskoordinate, in den Registerteil UR0 übernommen. Nun erfolgt eine Multiplikation des Inhalts des Registerteils UR0, also der Schwerpunktskoordinate, mit den Daten der Busse IN1 und IN2, also der gewichteten Fläche, wobei das Multiplikationsergebnis dann in den Registerteilen UR0 ... UR2 steht. Nun wird das bisherige Gesamtmoment aus dem Zwischenregister SR2 ausgelesen und in das Universalregister UR0 ... UR3 übernommen. Daraufhin wird die Summe des aktuell berechneten Moments und des bisherigen Gesamtmoments als neues Gesamtmoment in das Zwischenregister SR3 übernommen. Die bisher genannten Verarbeitungsschritte werden für alle linguistischen Werte durchgeführt und sobald dies erfolgt ist, wird die im Zwischenregister SR1 stehende Gesamtfläche über die EXOR-Schaltungen EXOR, also in invertierter Form ausgelesen. Die Division des im Universalregister UR0 ... UR3 stehenden Gesamtmoments durch den Inhalt des Zwischenregisters SR1 erfolgt dadurch, daß das MSB zwischengespeichert wird, die Signale der Addiererausgänge in die Registerteile UR1 ... UR3 übernommen werden, wenn das MSB gleich 0 ist, und die Registerteile UR0 und UR1 nach links verschoben, wobei das zwischengespeicherte MSB in negierter Form nachgezogen wird. Die Schritte zur Bildung eines Divisionsergebnisses werden aₓ + 1-mal ausgeführt, um eine Rundungsstelle zu erhalten. Das Divisionsergebnis steht dann im Registerteil UR0, von wo in ein Ausgaberegister transferiert werden kann und dies durch eine Fertigmeldung des Fuzzy-Logic-Coprozessors angezeigt wird.

Bei der Durchführung des MOM-Verfahrens wird die Inferenzbildung dadurch bewirkt, daß für jeden linguistischen Wert der Ausgangsvariablen das Produkt aus der Maßzahl für den Maximalwert H der Zugehörigkeitsfunktion des jeweiligen linguistischen Wertes der Ausgangsvariablen mit dem jeweiligen Gewichtungsfaktor G multipliziert wird und eine Defuzzifikation dadurch bewirkbar ist, daß diese Produkte miteinander vergleichbar und mindestens ein linguistischer Wert mit einem maximalen Produkt feststellbar ist, daß, sofern nur ein linguistischer Wert mit einem maximalen Produkt vorliegt, die zum linguistischen Wert mit maximalem Produkt gehörige Maßzahl P für den Mittelwert der Werte an denen jeweils der Maximalwert H erreicht wird mit der Maßzahl B für die Anzahl der Elemente der Zugehörigkeitsfunktion eines jeweiligen linguistischen Wertes der Ausgangsvariablen multiplizierbar und zu einer Summe aufaddierbar sind, und daß der scharfe Ausgangswert CO durch Quotientenbildung aus dieser Summe durch die Summe der Maßzahlen B für die Anzahl der Elemente der Zugehörigkeitsfunktion der linguistischen Werte der Ausgangsvariablen berechenbar ist.

Hierzu wird der Speicher SP1, also der jeweilige Gewichtungsfaktor G , und der Speicher SP3 also die jeweilige Maßzahl H ausgelesen und das Universalregister UR0 ... UR3 gelöscht. Daraufhin erfolgt eine Übernahme des Inhalts des Speichers SP3, also der jeweiligen Maßzahl H in den Registerteil UR0. Nun findet eine Multiplikation des Inhalts des Registerteils UR0 mit dem Signal des Busses IN2 statt, wobei das Multiplikationsergebnis in den Registerteilen UR2 und UR3 steht. Der Inhalt der Registerteile UR1 ... UR3, also die jeweilige gewichtete Maßzahl H, wird in das Zwischenregister SR2 übernommen und die Adresse ASP um 1 erhöht. Das Zwischenregister SR1, also die maximale gewichtete Maßzahl M, wird invertiert auf den Addierer gelegt, das MSB in einem ersten Flipflop zwischengespeichert und das Zwischenregister SR1 ausgelesen. Der Inhalt des Zwischenregisters SR1 wird in die Registerteile UR1 ... UR3 übernommen und das Zwischenregister SR2, also die neue gewichtete Maßzahl H, invertiert an die Addierereingänge gelegt. Daraufhin wird das MSB in einem zweiten Flipflop gespeichert und der Inhalt des zweiten Zwischenregisters, also die neue gewichtete Maßzahl H, auf den Bus gelegt und die Registerteile UR1 ... UR3 übernommen. Der Inhalt des Universalregisters wird in das Zwischenregister SR1 gespeichert, sofern das zweite Flipflop eine logische 1 enthält. Daraufhin wird der Speicher SP2, also die jeweilige Maßzahl B ausgelesen und das Universalregister gelöscht. Nun wird der Inhalt des Speichers 2 in die Registerteile UR1 ... UR3 übernommen und das Zwischenregister SR0, also die bisherige Summe aller Maßzahlen B ausgelesen. Sofern das erste und das zweite Flipflop eine logische 0 aufweisen, werden die Signale an den Addiererausgängen in das Universalregister UR0 ... UR3 übernommen und der Inhalt des Universalregisters in das Zwischenregister SR0 gespeichert, sofern das erste Flipflop eine logische 0 aufweist, also die neue gewichtete Maßzahl H größer gleich der bisherigen maximalen gewichteten Maßzahl H ist. Der Speicher SP2, also die jeweilige Maßzahl B, und der Speicher SP3, also die Maßzahl H, werden ausgelesen und der Inhalt des Speicher SP3 in den Registerteil UR0 übernommen. Nun erfolgt eine Multiplikation des Inhalts des Registerteils UR0 mit dem Signal des Busses IN2, also der Maßzahl B, wobei das Multiplikationsergebnis in den Registerteilen UR1 und UR2 steht. Das Zwischenregister SR3 wird ausgelesen und in das Universalregister UR0 ... UR3 übernommen, sofern das erste und zweite Flipflop eine logische 0 aufweisen, und die Summe aus dem bisherigen Inhalt des Zwischenregisters SR3 und dem Multiplikationsergebnis wird in das Zwischenregister SR3 übernommen, sofern das Flipflop 1 eine logische 0 aufweist. Wenn für alle linguistischen Werte der Ausgangsvariablen die oben genannten Schritte abgearbeitet sind, wird das Zwischenregister SR3 ausgelesen und das Universalregister gelöscht. Jetzt erfolgt eine Übernahme des Inhalts vom Zwischenregister SR3 in das Universalregister UR0 ... UR3 und das Zwischenregister SR0 wird über die als Inverter wirkenden EXOR-Gatter EXOR ausgelesen. Nun erfolgt eine Division des Inhalts des Universalregisters durch den Inhalt des Zwischenregisters SR0, wodurch die Mittelwertbildung erfolgt, deren Ergebnis im Registerteil UR0 steht. Zum Schluß erfolgt ein Transfer des Inhalts des Registerteils UR0 in ein Ausgaberegister und es wird eine Fertigmeldung des Fuzzy-Logic-Controllers erzeugt.

Bei einer Defuzzifikation nach dem sogenannten MMM-Verfahren erfolgt die Inferenzbildung wie beim MOM-Verfahren. Darauf werden die bei der Inferenz gebildeten Produkte miteinander verglichen und mindestens ein linguistischer Wert mit einem maximalen Produkt festgestellt. Nun wird die Summe der Maßzahlen B von linguistischen Werten mit maximalen Produkt gebildet, wobei bei jedem Summationsschritt eine weitere Maßzahl B von einem linguistischen Wert mit maximalen Produkt hinzu addiert wird. Während einer erneuten Summation der Maßzahlen B von linguistischen Werten mit maximalen Produkt wird eine bei der erneuten Summation gebildete Teilsumme mit der halbierten Summe aller Maßzahlen B von linguistischen Werten im maximalen Produkt verglichen. Ist die Teilsumme größer als die halbierte Summe der Maßzahlen B von linguistischen Werten mit maximalem Produkt, so wird der scharfe Ausgangswert CO durch Addition der Maßzahl P des linguistischen Wertes im jeweiligen Summationsschritt, der halbierten Maßzahl B des linguistischen Wertes im jeweiligen Summationsschritt und durch Subtraktion der halbierten Summe der Maßzahlen B von linguistischen Werten mit maximalen Produkt berechnet. Sofern die Teilsumme noch nicht größer als die halbierte Summe der Maßzahlen B von linguistischen Werten mit maximalem Produkt ist, wird die halbierte Summe bei jedem Summationsschritt um die Maßzahl B des linguistischen Wertes des jeweiligen Summationsschritt es vermindert.

## Patentansprüche

1. Vorrichtung (INF/DFUZ) zur Inferenzbildung und Defuzzifikation, bestehend aus einem Rechenwerk (RW), einer Speicher/Register-Einheit (SP/REG) und einem Steuerwerk (CTRL),
bei der aus Gewichtungsfaktoren (G) und Maßzahlen (M(OMF)), scharfe Ausgangssignale (CO) in Abhängigkeit von Steuersignalen (A, V) gebildet werden, wobei für jeden linguistischen Wert der Ausgangsvariablen ein Gewichtungsfaktor vorhanden ist und die Maßzahlen die Zugehörigkeitsfunktionen (OMF) der linguistischen Werte der Ausgangsvariablen charakterisieren,
dadurch gekennzeichnet,
daß jeweils eine erste Maßzahl die Fläche (F) und jeweils eine zweite Maßzahl eine Schwerpunktskoordinate (S) einer jeweiligen Zugehörigkeitsfunktion (OMF) eines linguistischen Wertes einer Ausgangsvariablen angibt;
daß die erste zweite Maßzahlen in einem Wissens Basisspeicher (KBM) gespeichert sind;
daß die Vorrichtung so arrangiert ist, daß eine Inferenz dadurch bewirkt wird, daß für jeden linguistischen Wert der Ausgangsvariablen das Produkt aus der Maßzahl für die jeweilige Fläche (F) und dem jeweiligen Gewichtungsfaktor (G) gebildet und zu einer Gesamtfläche aufsummiert wird;
und daß die Vorrichtung so arrangiert ist, daß eine Defuzzifikation (COG) nach dem Schwerpunktsverfahren dadurch bewirkt wird, daß für jeden linguistischen Wert der Ausgangsvariablen das Produkt aus der Maßzahl für die jeweilige Fläche, aus der Maßzahl für die jeweilige Schwerpunktskoordinate und aus den jeweiligem Gewichtungsfaktor gebildet und zu einem Gesamtmoment aufsummiert wird und daß der scharfe Ausgangswert (CO) aus dem Quotient von Gesamtmoment durch Gesamtfläche berechnet wird.

2. Vorrichtung (INF/DFUZ) zur Inferenzbildung und Defuzzifikation, bestehend aus einen Rechenwerk (RW), einer Speicher/Register-Einheit (SP/REG) und einem Steuerwerk (CTRL),
bei der aus Gewichtungsfaktoren (G) und Maßzahlen (M(OMF)), scharte Ausgangssignale (CO) in Abhängigkeit von Steuersignalen (A, V) gebildet werden, wobei für jeden linguistischen Wert der Ausgangsvariablen ein Gewichtungsfaktor vorhanden ist und die Maßzahlen die Zugehörigkeitsfunktionen (OMF) der linguistischen Werte der Ausgangsvariablen charakterisieren,
dadurch gekennzeichnet,
daß jeweils eine erste Maßzahl den Maximalwert (H) der Zugehörigkeitsfunktion des jeweiligen linguistischen Wertes der Ausgangsvariablen und jeweils eine zweite Maßzahl den Mittelwert (P) der Werte, an denen jeweils der Maximalwert (H) erreicht wird, darstellen,
daß jeweils eine dritte Maßzahl (B) die Anzahl der Elemente der Zugehörigkeitsfunktionen eines jeweiligen linguistischen Wertes der Ausgangsvariablen darstellen;
daß die erste, zweite und dritte Maßzahlen in einem Wissens Basisspeicher (KBM) gespeichert sind;
und daß die Vorrichtung so arrangiert ist, daß eine Inferenz dadurch bewirkt wird, daß für jeden linguistischen Wert der Ausgangsvariablen das Produkt aus der ersten Maßzahl (H) und dem jeweiligen Gewicht (G) gebildet wird.

3. Vorrichtung nach Anspruch 2, so arrangiert daß
eine Defuzzifikation (MOM), bei der bei einem Maximalwert die Koordinate des Maximalwerts und bei mehreren gleichen Maximalwerten der Mittelwert dieser Koordinaten ermittelt wird, dadurch bewirkt wird, daß diese Produkte miteinander verglichen und mindestens ein linguistischer Wert mit einem maximalen Produkt festgestellt wird,
daß, sofern nur ein linguistischer Wert mit einem maximalen Produkt vorliegt, die zum linguistischen Wert mit maximalem Produkt gehörige zweite Maßzahl (P) dem scharfen Ausgangswert entspricht und
daß sonst aus den zweiten Maßzahlen (P) der linguistischen Werte mit maximalem Produkt ein Mittelwert derart erzeugt wird, daß jeweils die zweite Maßzahl (P) der linguistischen Werte mit maximalem Produkt mit der jeweiligen dritten Maßzahl (B) multipliziert und zu einer Summe aufaddiert werden und
daß der scharfe Ausgangswert (CO) durch Quatientenbildung aus dieser Summe durch die Summe der dritten Maßzahlen (B) berechent wird.

4. Vorrichtung nach Anspruch 2, so arrangiert daß
eine Defuzzifikation (MMM), bei der bei einem Maximalwert die Koordinate des Maximalwertes und bei mehreren gleichen Maximalwerten der Mittelwert aus der kleinsten und der größten Koordinate ermittelt wird, dadurch bewirkt wird, daß die bei der Inferenz gebildeten Produkte miteinander verglichen und mindestens ein linguistischer Wert mit einem maximalen Produkt festgestellt wird,
daß eine Summe der dritten Maßzahlen (B) von linguistischen Werten mit maximalem Produkt gebildet wird, wobei bei jedem Summationsschritt eine weitere dritte Maßzahl (B) des linguistischen Wertes mit maximalem Produkt hinzuaddiert wird,
daß während einer erneuten Summation der dritten Maßzahlen (B) von linguistischen Werten mit maximalem Produkt nach jedem Summationsschritt eine Teilsumme mit der halbierten Summe aller dritten Maßzahlen von linguistischen Werten mit maximalem Produkt verglichen wird,
daß, sofern die Teilsumme größer als die halbierte Summe der dritten Maßzahlen von linguistischen Werten mit maximalem Produkt ist, der scharfe Ausgangswert (CO) durch Addition der zweiten Maßzahl (P) des jeweilige Summationsschrittes und der halbierten dritten Maßzahl (B) des jeweiligen Summationsschrittes und durch Subtraktion der halbierten Summe berechnet wird, und,
sofern die Teilsumme nicht größer als die halbierte Summe der dritten Maßzahlen von linguistischen Werten mit maximalem Produkt ist, die halbierte Summe bei jedem Summationsschritt um die dritte Maßzahl (B) des jeweiligen Summationsschrittes vermindert wird.

5. Verwendung einer Vorrichtung nach einem der vorhergehenden Ansprüche in einem Fuzzy-Logic-Coprozessor mit einer Auflösung der scharfen Ausgangswerte (CO) von größer 8 Bit.

## Claims

1. Apparatus (INF/DFUZ) for inferencing and defuzzification, comprising an arithmetic unit (RW), a memory/register unit (SP/REG) and a control mechanism (CTRL),
in which sharp output signals (CO) are formed from weighting factors (G) and dimension figures (M(OMF)) as a function of control signals (A, V), wherein there is a weighting factor for each linguistic value of the output variables, and the dimension figures characterize the association functions (OMF) of the linguistic values of the output variables,
characterized in that a first dimension figure in each case indicates the area (F), and a second dimension figure in each case indicates a centre of gravity coordinate (S) of a respective association function (OMF) of a linguistic value of an output variable;
in that the first and the second dimension figures are stored in a knowledge base memory (KBM);
in that the apparatus is arranged such that an inference is produced by forming the product, for each linguistic value of the output variables, of the dimension figure for the respective area (F) and the respective weighting factor (G), and these are added to form an overall area;
and in that the apparatus is arranged such that defuzzification (COG) is carried out using the centre of gravity method in that the product is formed, for each linguistic value of the output variables, of the dimension figure for the respective area, the dimension figure for the respective centre of gravity coordinate and the respective weighting factor, and these are added to form a total moment, and in that the sharp output value (CO) is calculated from the quotient of the total moment divided by the total area,

2. Apparatus (INF/DFUZ) for inferencing and defuzzification, comprising an arithmetic unit (RW), a memory/register unit (SP/REG) and a control mechanism (CTRL),
in which sharp output signals (CO) are formed from weighting factors (G) and dimension figures (M(OMF)) as a function of control signals (A, V), wherein there is a weighting factor for each linguistic value of the output variables, and the dimension figures characterize the association functions (OMF) of the linguistic values of the output variables,
characterized in that a first dimension figure in each case represents the maximum value (H) of the association function of the respective linguistic value of the output variables, and a second dimension figure in each case represents the mean value (P) of those values at which the maximum value (H) is in each case reached,
in that a third dimension figure (B) in each case represents the number of elements in the association functions of a respective linguistic value of the output variables;
in that the first, second and third dimension figures are stored in a knowledge base memory (KBM);
and in that the apparatus is arranged such that inference is formed by forming the product, for each linguistic value of the output variables, of the first dimension figure (H) and the respective weighting (G).

3. Apparatus according to Claim 2,
arranged such that defuzzification (MOM) is carried out, in which the coordinate of the maximum value is determined if there is one maximum value, and the mean value of these coordinates is determined if there are a plurality of identical maximum values, in that these products are compared with one another and at least one linguistic value with a maximum product is established,
such that, if there is only one linguistic value with a maximum product, the second dimension figure (P) associated with the linguistic value having the maximum product corresponds to the sharp output value, and
such that, otherwise, a mean value is produced from the second dimension figures (P) of the linguistic values with a maximum product in such a manner that the second dimension figure (P) of the linguistic values with a maximum product is in each case multiplied by the respective third dimension figure (B) and these are added to form a sum, and
such that the sharp output value (CO) is calculated by forming the quotient of this sum divided by the sum of the third dimension figures (B).

4. Apparatus according to Claim 2,
arranged such that defuzzification (MMM) is carried out, in which the coordinate of the maximum value is determined if there is one maximum value, and the mean value of the smallest and largest coordinates is determined if there are a plurality of identical maximum values, in that the products formed in the inference process are compared with one another and at least one linguistic value having a maximum product is established,
such that a sum of the third dimension figures (B) is formed from linguistic values with a maximum product, with a further third dimension figure (B) of the linguistic value with a maximum product being added in each summation step,
such that, during renewed summation of the third dimension figures (B) of linguistic values with a maximum product, a partial sum is compared after each summation step with half the sum of all the third dimension figures of linguistic values with a maximum product,
such that, if the partial sum is greater than half the sum of the third dimension figures of linguistic values with a maximum product, the sharp output value (CO) is calculated by addition of the second dimension figure (P) of the respective summation step and half the third dimension figure (B) of the respective summation step and by subtraction of half the sum, and,
if the partial sum is not greater than half the sum of the third dimension figures of linguistic values with a maximum product, half the sum is reduced, in each summation step, by the third dimension figure (B) of the respective summation step.

5. Use of an apparatus according to one of the preceding claims in a fuzzy logic coprocessor whose sharp output value (CO) resolution is greater than 8 bits.

## Revendications

1. Dispositif (INF/DFUZ) destiné à la formation d'inférence et à la défuzzification et constitué d'une unité de calcul (RW), d'une unité de mémorisation et d'enregistrement (SP/REG) et d'une unité de commande (CTRL),
dans lequel des signaux de sortie non flous (CO) sont formés à partir de facteurs de pondération (G) et de chiffres d'indices (M(OMF)) en fonction de signaux de commande (A, V), un facteur de pondération existant pour chaque valeur linguistique des variables de sortie et les chiffres d'indices caractérisant les fonctions d'appartenance (OMF) des valeurs linguistiques des variables de sortie,
caractérisé par le fait
que, à chaque fois un premier chiffre d'indice indique la surface (F) d'une fonction d'appartenance respective (OMF) d'une valeur linguistique d'une variable de sortie et à chaque fois un deuxième chiffre d'indice indique une coordonnée de centre de gravité (S) de ladite fonction ;
que le premier et le deuxième chiffre d'indice sont mémorisés dans une mémoire de base de connaissances (KBM) ;
que le dispositif est structuré de telle sorte qu'une inférence est mise en oeuvre par le fait que, pour chaque valeur linguistique des variables de sortie, le produit du chiffre d'indice pour la surface respective (F) et du facteur de pondération respectif (G) est formé et est cumulé afin de donner une surface totale ;
et que le dispositif est structuré de telle sorte qu'une défuzzification (COG) selon le procédé à centre de gravité est mise en oeuvre par le fait que, pour chaque valeur linguistique des variables de sortie, le produit du chiffre d'indice pour la surface respective, du chiffre d'indice pour la coordonnée de centre de gravité et du facteur de pondération respectif est formé et est cumulé afin de donner un moment total et que la valeur de sortie non floue (CO) est calculée à partir du quotient du moment total par la surface totale.

2. Dispositif (INF/DFUZ) destiné à la formation d'inférence et à la défuzzification et constitué d'une unité de calcul (RW), d'une unité de mémorisation et d'enregistrement (SP/REG) et d'une unité de commande (CTRL), dans lequel des signaux de sortie non flous (CO) sont formés à partir de facteurs de pondération (G) et de chiffres d'indices (M(OMF)) en fonction de signaux de commande (A, V), un facteur de pondération existant pour chaque valeur linguistique des variables de sortie et les chiffres d'indices caractérisant les fonctions d'appartenance (OMF) des valeurs linguistiques des variables de sortie,
caractérisé par le fait
que, à chaque fois un premier chiffre d'indice représente la valeur maximale (H) de la fonction d'appartenance de la valeur linguistique respective des variables de sortie et à chaque fois un deuxième chiffre d'indice représente la valeur moyenne (P) des valeurs pour lesquelles la valeur maximale (H) est atteinte à chaque fois ;
que, à chaque fois un troisième chiffre d'indice (B) représente le nombre des éléments des fonctions d'appartenance d'une valeur linguistique respective des variables de sortie ;
que le premier, le deuxième et le troisième chiffre d'indice sont mémorisés dans une mémoire de base de connaissances (KBM) ;
et que le dispositif est structuré de telle sorte qu'une inférence est mise en oeuvre par le fait que, pour chaque valeur linguistique des variables de sortie, le produit du premier chiffre d'indice (H) et du poids respectif (G) est formé.

3. Dispositif selon la revendication 2, structuré de telle sorte
qu'une défuzzification (MOM), lors de laquelle sont déterminées, dans le cas d'une valeur maximale, la coordonnée de la valeur maximale et, dans le cas de plusieurs valeurs maximales, identiques, la valeur moyenne de ces coordonnées, est mise en oeuvre par le fait que ces produits sont comparés entre eux et qu'au moins une valeur linguistique ayant un produit maximal est déterminée,
que, dans la mesure où il n'y a qu'une valeur linguistique ayant un produit maximal, le deuxième chiffre d'indice (P) associé à la valeur linguistique ayant un produit maximal correspond à la valeur de sortie non floue et
que, sinon, une valeur moyenne est produite à partir des deuxièmes chiffres d'indices (P) des valeurs linguistiques ayant un produit maximal de telle sorte qu'à chaque fois le deuxième chiffre d'indice (P) des valeurs linguistiques ayant un produit maximal est multiplié par le troisième chiffre d'indice respectif (B) et est cumulé afin de donner une somme et
que la valeur de sortie non floue (CO) est calculée par la formation du quotient de cette somme par la somme des troisièmes chiffres d'indices (B).

4. Dispositif selon la revendication 2, structuré de telle sorte
qu'une défuzzification (MMM), lors de laquelle sont déterminées, dans le cas d'une valeur maximale, la coordonnée de la valeur maximale et, dans le cas de plusieurs valeurs maximales identiques, la valeur moyenne entre la plus petite et la plus grande coordonnée, est mise en oeuvre par le fait que les produits formés lors de l'inférence sont comparés entre eux et au moins une valeur linguistique ayant un produit maximal est déterminée,
qu'une somme des troisièmes chiffres d'indices (B) de valeurs linguistiques ayant un produit maximal est formée, un autre troisième chiffre d'indice (B) de la valeur linguistique ayant un produit maximal étant ajouté à chaque étape de cumul,
que, pendant un nouveau cumul des troisièmes chiffres d'indices (B) de valeurs linguistiques ayant un produit maximal, après chaque étape de cumul, une somme partielle est comparée à la moitié de la somme de tous les troisièmes chiffres d'indices de valeurs linguistiques ayant un produit maximal,
que, dans la mesure où la somme partielle est supérieure à la moitié de la somme de tous les troisièmes chiffres d'indices de valeurs linguistiques ayant un produit maximal, la valeur de sortie non floue (CO) est calculée par addition du deuxième chiffre d'indice (P) de l'étape de cumul respective et de la moitié du troisième chiffre d'indice (B) de l'étape de cumul respective et par soustraction de la moitié de la somme, et
dans la mesure où la somme partielle n'est pas supérieure à la moitié de la somme des troisièmes chiffres d'indices de valeurs linguistiques ayant un produit maximal, la moitié de la somme à chaque étape de cumul est réduite du troisième chiffre d'indice (B) de l'étape de cumul respective.

5. Application d'un dispositif selon l'une des revendications précédentes dans un coprocesseur à logique floue ayant une définition des valeurs de sortie non floues (CO) supérieure à 8 bits.
